# EUROPÄISCHE PATENTSCHRIFT

(11) **EP 2 788 786 B1**
(45) Veröffentlichungstag und Bekanntmachung des Hinweises auf die Patenterteilung: **14.09.2016**
(21) Anmeldenummer: 12781332.7
(22) Anmeldetag: 08.11.2012
(51) Int. Cl.: G01S 7/497, G01S 7/486, G01S 7/526

(54) **VERFAHREN ZUR VERMESSUNG EINER ÜBERTRAGUNGSSTRECKE MITTELS KOMPENSIERENDER AMPLITUDENMESSUNG UND DELTA-SIGMA-METHODE SOWIE VORRICHTUNG ZUR DURCHFÜHRUNG DES VERFAHRENS**
METHOD FOR MEASURING A TRANSFER ROUTE BY MEANS OF COMPENSATING AMPLITUDE MEASUREMENT AND DELTA-SIGMA METHOD AND DEVICE FOR PERFORMING THE METHOD
PROCÉDÉ DE MESURE D'UNE VOIE DE TRANSMISSION À L'AIDE D'UNE MESURE D'AMPLITUDE À COMPENSATION ET PROCÉDÉ DELTA-SIGMA AINSI QUE DISPOSITIF DESTINÉ À L'EXÉCUTION DU PROCÉDÉ

(30) Priorität: 06.12.2011 EP 11192161
(43) Veröffentlichungstag der Anmeldung: 15.10.2014
(73) Patentinhaber: Elmos Semiconductor Aktiengesellschaft, 44227 Dortmund (DE)
(72) Erfinder: SPIEGEL, Egbert, 45891 Gelsenkirchen (DE)
(74) Vertreter: Durm & Partner
(86) Internationale Anmeldenummer: PCT/EP2012/072092
(87) Internationale Veröffentlichungsnummer: WO 2013/083346

(56) Entgegenhaltungen:
- EP-A1- 2 159 600
- DE-A1-102007 005 187

## Beschreibung

Die vorliegende Erfindung betrifft ein Verfahren und eine Vorrichtung sowie einen Sensor zur Vermessung eines Signalübertragungskanals von einem Sender über eine Übertragungsstrecke zu einem Sensor.

In vielen Anwendungsbereichen muss ein Übertragungskanal von einem Sender zu einem Sensor bestimmt werden. Beispielsweise kann es notwendig sein, die Entfernung eines Bezugsobjektes zu anderen Objekten zu bestimmen. In diesem Fall kann beispielsweise die Amplitudendämpfung eines Lichtsignals durch den Abstand mit 1/r⁴ zur Abstandsmessung herangezogen werden.

Hier sind zahlreiche kompensierende Verfahren bekannt, bei denen das eigentliche Übertragungssignal mit einem kompensierenden Signal am Sensor so überlagert wird, dass der Sensor ein nahezu konstantes Signal in Summe empfängt. Als Beispiele seien genannt:
DE10001955A1
DE10024156A1
DE19839730C1
DE930983U1
DE10001943C1
DE10346741B3
DE102004025345B3
DE102005013325A1
DE102005010745B3
DE102007005187B4

Alle diese Verfahren haben folgende Eigenschaften gemeinsam:
- das Kompensationssignal und/oder das Sendesignal ist ein in der Amplitude geregeltes Analogsignal;
- das Sendesignal hat ein konstantes Tastverhältnis und/oder ist im Wesentlichen monofrequent.

Das analoge Kompensationssignal ist der wesentliche Nachteil all dieser Verfahren. Es erfordert einen regelbaren Verstärker oder anders ausgedrückt einen Analog-Multiplizierer, der in der Regel nicht ohne größeren Aufwand temperaturstabil herstellbar ist. Ein solches System ist nur erschwert fertigbar. Insbesondere erfordert es sehr komplexe analoge Fertigungsprüfungen.

Ausgehend von diesem Stand der Technik liegt der vorliegenden Erfindung die Aufgabe zugrunde, eine rein digitale Ansteuerung des Senders und/oder des Kompensationssenders zu ermöglichen und hierdurch die besagten Probleme zu verringern.

Gelöst wird die Aufgabe durch ein Verfahren mit den Merkmalen des Anspruchs 1, durch einen Sensor gemäß Anspruch 12 und durch eine Vorrichtung gemäß Anspruch 18.

Das erfindungsgemäße Verfahren zur Vermessung der Übertragungseigenschaften mit zumindest einer ersten Übertragungsstrecke umfasst zumindest einen ersten Sender, der zumindest ein Signal in besagte erste Übertragungsstrecke hineinsendet. Das Signal wird nach Durchgang durch zumindest einen Teil der besagten ersten Übertragungsstrecke in mindestens einem ersten Empfänger detektiert. Es wird in besagtem Empfänger mit mindestens einem zweiten Signal eines zweiten Senders aus zumindest einer im Wesentlichen in ihren Eigenschaften bekannten oder vorbestimmten oder vorbestimmbaren Übertragungsstrecke im Wesentlichen summierend überlagert. Das Verfahren zeichnet sich dadurch aus, dass ein Sendesignal zwischen zumindest dem besagten ersten Sender und dem besagten zweiten Sender zumindest zeitweise geregelt verteilt wird. Diese Umregelung erlaubt eine Aufteilung des Sendesignals zwischen dem ersten Sender und dem zweiten Sender, der bevorzugt ein Kompensationssender ist. Die Verteilung des Sendesignals kann stufenlos zwischen 0% und 100% erfolgen. Es sind also beliebige Verteilungen möglich. Bevorzugt ist die Umregelung eine (geregelte) Umschaltung, bei der die Verteilung derart erfolgt, dass das Sendesignal für den ersten Sender auf 100% geregelt wird, während es für den zweiten Sender zu 0% wird und umgekehrt. Bevorzugt wird das Sendesignal zwischen den beiden Sendern zumindest zeitweise zeitabhängig oder phasenabhängig geregelt umgeschaltet. Die Regelung erfolgt bevorzugt derart, dass bezogen auf das durch den Empfänger empfangene Signal der dortige über einen vordefinierten Zeitraum gemittelte erste Signalanteil, der dem ersten Sender zuzuordnen ist, im Wesentlichen genauso groß ist wie der dortige über den vordefinierten Zeitraum gemittelte zweite Signalanteil, der dem besagten zweiten Sender zuzuordnen ist.

Gemäß dem Verfahren wird - bezogen auf das durch den Empfänger empfangene Signal (Empfängersignal oder Empfängerausgangssignal genannt) - die Abweichung des über den vordefinierten Zeitraum gemittelten ersten Signalanteils von dem über besagten vordefinierten Zeitraum gemittelten zweiten Signalanteil zumindest zeitweise als Regelsignal für die Verteilung, insbesondere für die geregelte Umschaltung des Sendesignals zwischen zumindest dem ersten Sender und dem zweiten Sender benutzt.

Die Sendesignale für den ersten Sender und den zweiten Sender können unmodulierte oder modulierte Signale sein. Bei der Verwendung von modulierten Signalen, beispielsweise von frequenz- oder amplitudenmodulierten Signalen, ist in der Schaltung des Sensors ein optionaler Filter oder Demodulator vorgesehen, der bevorzugt das Empfängerausgangssignal direkt oder nach Verstärkung mittels eines Verstärkers demoduliert. Die Demodulation kann optional auch später in der Verarbeitungskette des Empfängersignals erfolgen.

Im Rahmen der Erfindung wurde erkannt, dass zur rein digitalen Ansteuerung des oder der Sender eine Änderung der Modulation und des Gesamtaufbaus des Systems notwendig sind.

Das Verfahren wird erfindungsgemäß in einem Sensor oder einer Vorrichtung zur Vermessung der Übertragungseigenschaften einer Übertragungsstrecke eingesetzt. Erfindungsgemäß umfasst der Sensor eine Regelungsschaltung. Die Regelungsschaltung schließt einen Signalgenerator, einen ersten und einen zweiten Multiplizierer, einen Integrierer und einen Komparator ein. Diese Regelungsschaltung kann bevorzugt als digitale Logik oder Finite-State-Machine oder als Rechensystem ausgebildet sein, wobei das Rechensystem mindestens einen Speicher und eine zentrale Verarbeitungseinheit (Zentraleinheit, CPU) umfasst. Zusätzlich sind bei der Digitalisierung der Regelungsschaltung auch die Treiber für den ersten und zweiten Sender als Digital-Zu-Analog-Wandler ausgebildet. Bevorzugt wird ein Ein-Bit-Digital-Zu-AnalogWandler (DAC) verwendet. Alternativ und ebenso bevorzugt ist die Verwendung eines Mehr-Bit-DAC. Der Empfangsverstärker des erfindungsgemäßen Sensors ist ein Analog-Digital-Wandler (ADC, Analog-Digital-Converter), der das Empfangssignal des Empfängers in ein digitalisiertes Signal umwandelt, was dann in der digitalen Regelungsschaltung weiter verarbeitet wird.

Somit findet erst vor Speisung der Sender eine Umwandlung der digitalen Signale in analoge Signale statt. Das analoge Empfangssignal des Empfängers, der beispielsweise eine Photodiode sein kann, wenn die Sender LEDs sind, wird direkt hinter dem Empfänger digitalisiert. Die Verarbeitung erfolgt digital.

Die rein digitale Ansteuerung des Kompensationssenders hat den Vorteil dass sie zum einen viel einfacher zu testen ist - z.B. unter Zuhilfenahme eines "Scan-Paths" - und zum anderen in der Regel mit einer kleineren Chip-Fläche realisierbar ist als eine vergleichbare analoge Lösung, wie sie dem Stand der Technik entspricht.

Die erste Übertragungsstrecke ist die zu beobachtende Übertragungsstrecke, z.B. der Raum vor einem Fahrzeug. Wenn die Übertragungseigenschaften der Übertragungsstrecke, zu der auch Objekte gehören, die in dem Übertragungspfad zwischen Sender und Empfänger positioniert sind, bekannt sind, ist auch die Position der erkannten Objekte bekannt. So kann eine Objekterkennung erfolgen. Es kann zumindest die Entfernung von dem Sender bzw. dem Empfänger zu dem Objekt detektiert werden. Gegebenenfalls müssen mehrere erste Sender verwendet werden, um die Position im Raum, die Bewegung und/oder Geschwindigkeit der Objekte zu erkennen. Alternativ ist es auch möglich, mehrere Empfänger einzusetzen.

Der als zweiter Sender bezeichnete Sender ist ein Vergleichs- oder Kompensationssender, um die Vorrichtung und das Verfahren von Störeinflüssen - jedenfalls weitestgehend - unabhängig zu machen. Der zweite Sender sendet ein Signal direkt zu dem Empfänger über eine zweite Übertragungsstrecke, die von der ersten Übertragungsstrecke verschieden ist. Die Eigenschaften der zweiten Übertragungsstrecke sind bekannt, vorbestimmt oder vorbestimmbar.

Gemäß der vorliegenden Erfindung werden der erste und der zweite Sender geregelt mit einem Regelsignal angesteuert. Dabei erfolgt eine geregelte Umschaltung des Sendesignals zwischen den beiden Sendern, bevorzugt mittels eines Schalters.

Erfindungsgemäß kann der oben beschriebene Sensor, der bevorzugt weitgehend digital ausgebildet ist, in einer Vorrichtung zur Vermessung der Übertragungseigenschaften einer Übertragungsstrecke verwendet werden. Der Sensor hat einen Sensorausgang, an dem ein Umschaltsignal, das zur Umschaltung des Sendesignals zwischen dem ersten und zweiten Sender verwendet wird, an eine Verarbeitungseinheit übergeben wird. Beispielsweise kann eine derartige Vorrichtung in einem Kraftfahrzeug eingesetzt werden, um Objekte in der Nähe des Kraftfahrzeugs zu detektieren. Die Vorrichtung kann beispielsweise eine Einparkhilfe oder ein Abstandsmesser sein.

Selbstverständlich ist die vorliegende Erfindung nicht auf optische Signale beschränkt, bei denen die Sender als LED und der Empfänger als Photodiode ausgebildet sind. Die Sender können auch Spulen, Kondensatoren, kapazitive Platten, Antennen oder andere Steuerungsmittel sein, um die entsprechenden Flüsse, einschließlich fluidischer Materialflüsse aussenden zu können. Der Empfänger ist dann entsprechend ausgebildet, also beispielsweise als Photodiode, Spule, Antenne oder Ähnliches.

Neben der Verarbeitung von sichtbaren oder nicht-sichtbaren Lichtsignalen, wie beispielsweise Infrarot-Strahlung, können auch akustische Signale also Schallwellen im hörbaren oder nicht-hörbaren Bereich verwendet werden. Bevorzugt sind beispielsweise Ultraschallwellen. Die Schaltung des Sensors ist dann entsprechend anzupassen. Beispielsweise werden die Sender durch Lautsprecher und der Empfänger durch ein Mikrofon ersetzt. Insbesondere bei der Verwendung von Schallwellen, aber auch bei optischen Signalen, ist es möglich, eine modulierte Trägerfrequenz zu verwenden. Bei der Verarbeitung von modulierten Signalen ist im Sensor zusätzlich ein optionaler Demodulator anzuordnen, um das Signal vor der Weiterverarbeitung zu demodulieren.

Die Verwendung von optischen Signalen oder Ultraschallsignalen bietet sich insbesondere beim Einsatz des Sensors in einem Fahrzeug an. Auch hier werden die Übertragungseigenschaften einer Übertragungsstrecke vermessen. Es lassen sich so Objekte in der Nähe des Fahrzeugs detektieren. Das Verfahren kann beispielsweise als Abstandsradar mit optischer Strahlung als Signal (Radarstrahlung) oder als Einparkhilfe bei der Verwendung von Ultraschall (akustisches Signal) oder von Infrarotstrahlung eingesetzt werden. Eine Verarbeitungseinheit im Fahrzeug wird bevorzugt mit dem Umschaltsignal des Sensors gespeist.

Die folgende Beschreibung ist nur ein Beispiel für eine Verkörperung der Erfindung. Bevor die Erfindung im Detail beschrieben wird, ist daher darauf hinzuweisen, dass sie nicht auf die jeweiligen Bauteile der Schaltung oder die jeweiligen Verfahrensschritte beschränkt ist, da diese Bauteile und Verfahren variieren können. Insbesondere können, wie im Folgenden beschrieben wird, wesentliche Teile des Verfahrens alternativ in Software oder als digitale Logik realisiert werden. Die hier verwendeten Begriffe sind lediglich dafür bestimmt, besondere Ausführungsformen zu beschreiben und werden nicht einschränkend verwendet. Wenn zudem in der Beschreibung und in den Ansprüchen die Einzahl oder unbestimmte Artikel verwendet werden, bezieht sich dies auch auf die Mehrzahl dieser Elemente, solange nicht der Gesamtzusammenhang eindeutig etwas anderes deutlich macht.

Im Folgenden wird ein Ausführungsbeispiel der Erfindung unter Bezugnahme auf die beigefügten Abbildungen beschrieben. Es zeigen:
- Figur 1:: ein Blockschaltbild einer Vorrichtung zur Durchführung des Verfahrens;
- Figur 2:: ein beispielhaftes Timing der Signale aus Fig. 1;
- Figur 3:: ein Blockschaltbild einer Vorrichtung (Sensor) zur Durchführung des Verfahrens mit Schallsignalen;
- Figur 4:: ein beispielhaftes Timing der Signale aus Fig. 1 bei Verwendung von modulierten Trägerfrequenzsignalen entsprechend Fig. 2;
- Figur 5:: ein Blockschaltbild bei Realisierung als Mikroprozessorsystem; und
- Figur 6:: ein Blockschaltbild bei gleichzeitiger Amplituden-Regelung und PWM-Regelung.

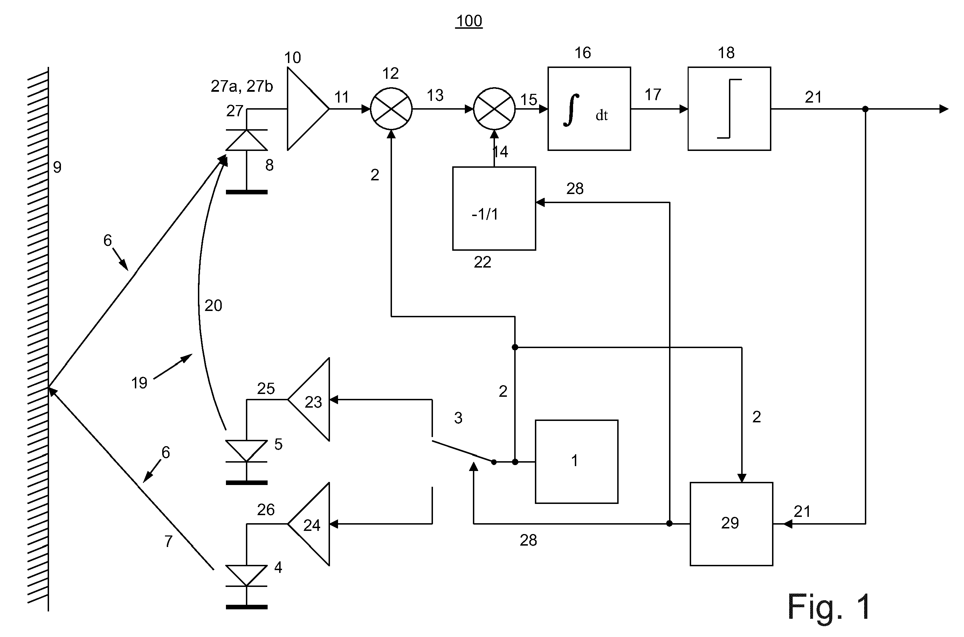

Die Erfindung wird zunächst anhand der Figuren 1 (Blockschaltbild) und 2 (Signaldiagramm) erläutert:

Ein erfindungsgemäßer Sensor 100 umfasst einen Signalgenerator 1, der ein Signal 2 erzeugt, typischerweise ein Taktsignal. Dieses Signal 2 wird je nach Stellung des Schalters 3 über einen als Treiberbaustein ausgebildeten Verstärker 24 als Senderspeisesignal 26 auf einen Sender 4 oder über den als Treiberbaustein ausgebildeten Verstärker 23 als Kompensatorspeisesignal 25 auf einen Kompensationssender 5 gelenkt. In diesem beispielhaften Fall handelt es sich um eine Sende-LED 4 und eine Kompensations-Sende-LED 5. Statt des im Folgenden weiter besprochenen optischen Systems basierend auf LEDs und Photodioden sind auch andere Systeme denkbar, die beispielsweise
▪ auf induktiv übermittelten Signalen beruhen und bei denen die Sender und Empfänger Spulen sind;
▪ auf kapazitiven Signalen beruhen und bei denen Kondensatorplatten als Sender und Empfänger verwendet werden oder
▪ auf induktiv übermittelten Signalen mit Spulen als Sender und Hall-Platten als Empfänger beruhen oder
▪ auf elektromagnetischen Wellen beruhen und Antennen als Sender und Empfänger verwenden; oder
▪ auf Schallwellen mit Lautsprechern als Sender und Mikrophonen als Empfänger beruhen; oder
▪ auf modifizierbaren Materialflüssen basieren, beispielsweise in Röhren strömende Flüssigkeiten oder Gase oder andere Fluids, wobei Sender, beispielsweise Injektoren von Reagenzien sind, und Empfänger beispielsweise Sensoren insbesondere beispielsweise Farbmesssensoren oder -geräte sind; oder
▪ auf anderen modifizierbaren oder modulierbaren Energie- und/oder Impulsströmen mit entsprechenden Sendern und Empfängern basieren.

Alle diese Systeme wenden das gleiche hier beschriebene Grundprinzip an.

Der Sender 4 strahlt nun ein Signal 7 in eine Übertragungsstrecke 6 ab, das nach Durchgang durch die Übertragungsstrecke 6 durch einen Empfänger 8 empfangen wird. Hierbei kann das Signal 7 durch die Übertragungsstrecke 6 modifiziert werden. Das kann beispielsweise durch Objekte 9 geschehen, an denen das Signal 7 reflektiert wird, bevor es auf den Empfänger 8 trifft.

Ein Signal 27 des Empfängers 8 beruht auf dem empfangenen Signal 7. Das Signal 27 wird in einem Verstärker 10 verstärkt und ggf. impedanzgewandelt.

Das Ausgangssignal 11 des Verstärkers 10 wird mit dem Signalgeneratorsignal 2 des Signalgenerators 1 in einem Multiplizierer 12 zu einem neuen Signal 13 multipliziert.

Dieses Signal 13 wird in Abhängigkeit des digitalen Vorzeichensignals 14, das in einem Vorzeichengenerator 22 in Abhängigkeit eines Umschaltsignals 28 erzeugt wird, mit -1 bzw. +1 zum Signal 15 multipliziert. Hierdurch kommt es zu einer Auf- bzw. Abintegration des Signals 13 im nachfolgenden Integrator oder Dezimationsfilter 16. Dessen analoges Ausgangssignal 17 wird durch einen Komparator 18 in das digitale Vorzeichensignal 21 gewandelt. Dieses digitale Vorzeichensignal 21 wird durch eine Verzögerungsschaltung 29 um einen Takt des Signals 2 verzögert zum Umschaltsignal 28. Anhand des Umschaltsignals 28 wird entschieden, ob der Sender 4 mit dem Signalgenerator 1 und dem Signal 2 verbunden wird, also sendet, oder ob der Kompensationssender 5 mit dem Signalgenerator 1 und dem Signal 2 verbunden wird.

Das Vorzeichensignal 21 entscheidet also über die Stellung des Schalters 3 beim nächsten Takt des Signals 2. Dieses Verfahren entspricht im Wesentlichen einer überlagerten Puls-Weiten-Modulation (PWM-Modulation) des Signals 2, wobei die PWM-Modulation zur Erzeugung des Signals 26 für den ersten Sender 4 invers zur PWM-Modulation zur Erzeugung des Signals 25 für den Kompensationssender 5 erfolgt.

Der Kompensationssender 5 strahlt selbst ein Signal 19 in eine andere Übertragungsstrecke 20 ein, die ebenfalls am Empfänger 8 endet. Dort summieren sich die Signale 7, 19 der ersten Übertragungsstrecke 6 und der zweiten Übertragungsstrecke 20. Am Ausgang des Empfängers 8 wird aus den beiden Signalen 7, 19 das Signal 27 gebildet.

Im Gegensatz zur bekannten Auswertung einer sogenannten "optischen Brücke" nach dem beispielsweise in DE 10 2007 005 187 beschriebenen Halios-Verfahren, bei dem das Summensignal 27 (Wechselanteil) der beiden Übertragungsstrecken 6, 20 im Empfänger zu Null geregelt wird, stellt sich hier der zeitliche Mittelwert der beiden Signalanteile 27a, 27b (via der Übertragungsstrecken 6, 20) zu Null am Empfänger 8 ein. Der Signalanteil 27a ist auf das Signal 7 des ersten Senders 4 zurückzuführen, der Signalanteil 27 b auf das Signal 19 des zweiten Senders 5.

Bei gegenüber der Taktfrequenz des Signalgenerators 1 langsamen Störungen - z.B. im Falle einer Verwendung von LEDs bei Fremdlichtänderung - stellt dies keinen nennenswerten Nachteil dar. Durch Anwendung eines Delta-Sigma-Verfahrens entfallen die in den bekannten Schaltungen notwendigen geregelten Stromquellen, beispielsweise für die Ansteuerung der Sende-LEDs 4, 5 im Falle der Verwendung von LEDs. Der (digitale) Bitstream am Ausgang 21 ist im Wesentlichen identisch mit dem Vorzeichensignal 14. Er ist lediglich einen Takt voraus und invertiert. Er repräsentiert die Disbalance der beiden Signalübertragungsstrecken 6, 20, also die Abweichung der Signalanteile 27a, 27b zueinander. Die Auflösung wird je nach Anwendung durch ein entsprechendes Dezimationsfilter 16 sichergestellt.

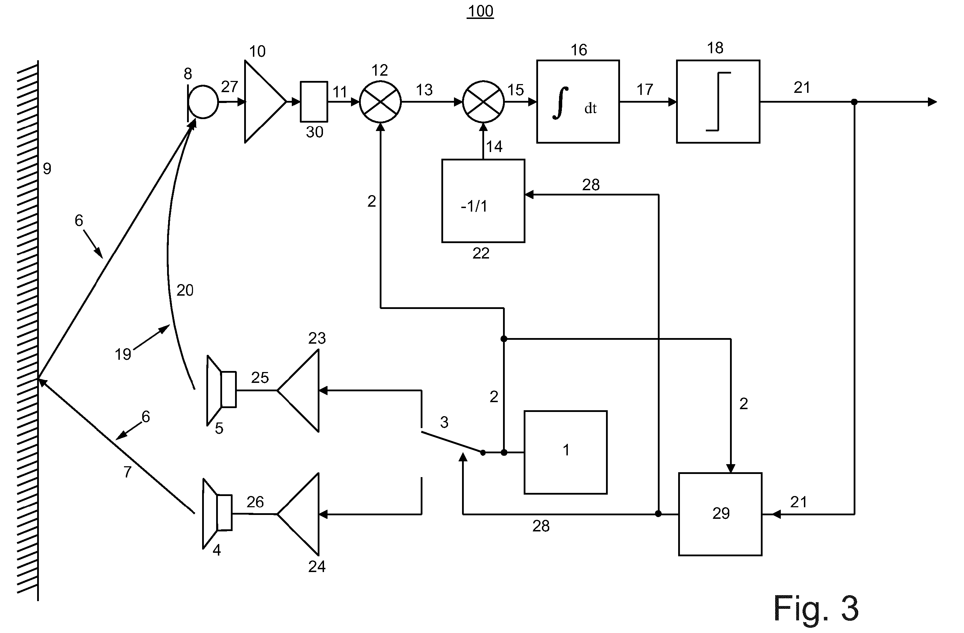

Eine besondere Ausführungsform des erfindungsgemäßen Sensors 100 zeigt Figur 3. Bei diesem Sensor 100 werden akustische Signale 7, 19 verwendet. Der Sender 4 und der Kompensationssender 5 sind deshalb als Lautsprecher ausgebildet. Der Empfänger 8 ist ein Mikrofon. Die Signale 7, 19 sind Schallwellen oder Ultraschallwellen, die von dem Sensor 100 verarbeitet werden. Die Sender 4,5 und der Empfänger 8 sind an die verwendeten Schallwellen jeweils anzupassen. Bei Ultraschallwellen können beispielsweise dynamische und elektrostatische Lautsprecher oder insbesondere Piezolautsprecher oder beispielsweise piezoelektrische Quarz- oder Keramikschwinger verwendet werden.

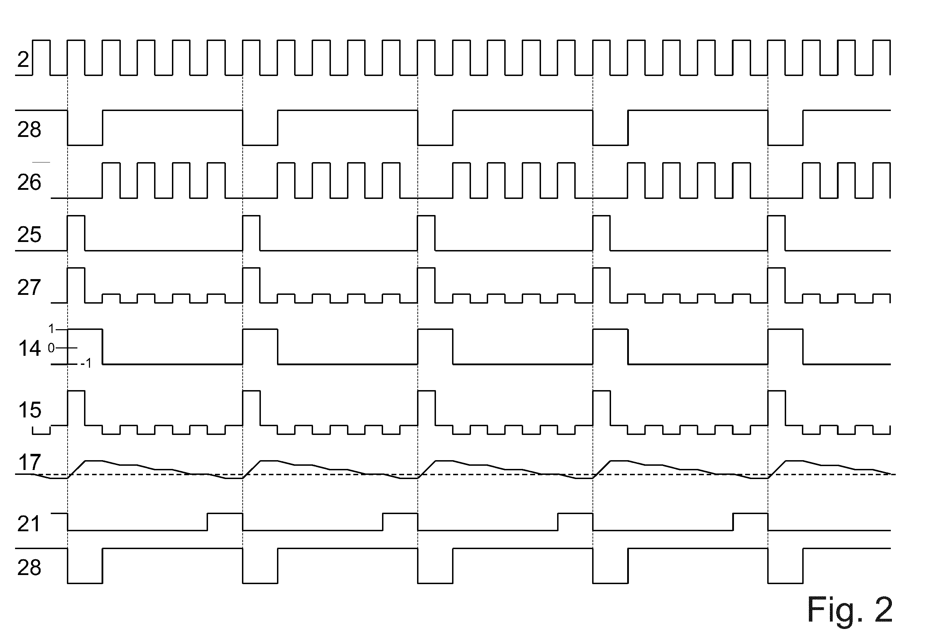

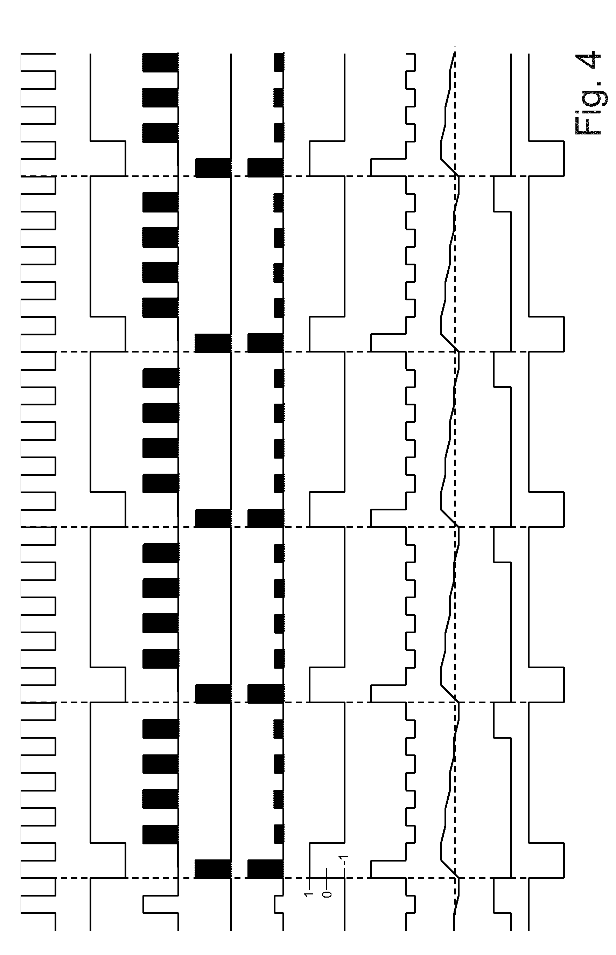

Bei der Verwendung von Schallwellen können die Lautsprecher 4, 5 auch modulierte Trägerfrequenzen abstrahlen. Für die Weiterverarbeitung dieser Signale in dem Sensor 100 muss nach dem Empfänger 8 ein Filter oder ein Demodulator 30 vorgesehen sein. Der optionale Demodulator 30 ist bevorzugt zwischen dem Verstärker 10 und dem Multiplizierglied 12 angeordnet. Die Verwendung demodulierter Signale ist in Figur 4 gezeigt. Dort ist zu erkennen, dass die Signale 25, 26 und 27 modulierte Signale sind. Die weiteren Signale in der Verarbeitung bleiben aufgrund des verwendeten Filters 30 unverändert gegenüber den in Figur 2 gezeigten Signalen.

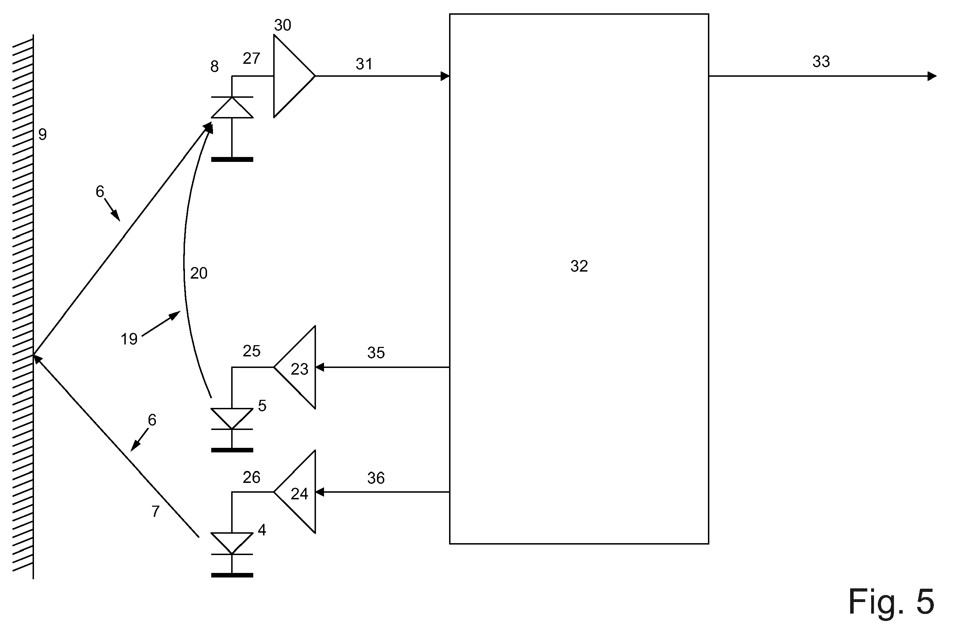

Wie bereits bemerkt kann dieses Verfahren auch in Software beispielsweise unter Nutzung einer Mikrorechner-Plattform, insbesondere einer Digitalen Signalprozessor-Plattform (DSP-Plattform), realisiert werden. Dies wird kurz und für den Fachmann ausreichend anhand von Figur 5 erläutert.

Das Signal 27 des Empfängers 8 wird durch einen Analog-zu-Digital-Wandler (ADC) 30 in ein rein digitales Signal 31 gewandelt, das einer digitalen Verarbeitungseinheit 32 zugeführt wird. Hierbei ist wichtig, dass es sich bei dem ADC 30 auch um einen Ein- oder Mehr-Bit-ADC handeln kann. Wenn in diesem Zusammenhang von einer digitalen Verarbeitungseinheit 32 gesprochen wird, so ist damit gemeint, dass deren Funktionalität im Wesentlichen auf Booleschen Funktionen beruht. Der Fachmann wird diese digitale Verarbeitungseinheit 32 typischerweise je nach Anwendungszweck beispielsweise als DSP-Plattform, Mikrorechner-Plattform oder digitale Logikschaltung etc. realisieren. In der Regel ist es sinnvoll, dass diese digitale Verarbeitungseinheit 32 mindestens zwei Ausgangssignale 35, 36, digital oder analog, aufweist, mit denen die Treiberbausteine (Verstärker) 24, 23 der Sender 4, 5 angesteuert werden. Selbstverständlich kann man je nach Standpunkt die Treiber 24, 23 als einen Teil der digitalen Verarbeitungseinheit 32 ansehen, wenn diese ebenfalls digitale Ausgangssignale 26, 25 liefern. Bei den Treibern 24, 23 kann es sich jedoch funktionell auch um Digital-zu-Analogwandler 24, 23 (D/A-Wandler) handeln, die die Signale 26, 25 nicht nur an oder ausschalten sondern in ihrer Amplitude entsprechend den vorgegebenen, dann digitalen Signalen 35, 36 ausgeben (Fig. 5).

Des Weiteren ist es sinnvoll, dass die digitale Verarbeitungseinheit 32 in der Lage ist, über eine Schnittstelle 33, die je nach Anwendungszweck digital oder analog oder einem komplexeren Standard bzw. Protokoll entsprechend gestaltet ist, mit einem übergeordnetem System zu kommunizieren und die ermittelten Daten in geeigneter Form, insbesondere digital oder analog, auszutauschen. Während die in Figur 5 gezeigte Schaltung z. B. einen Näherungssensor eines Kraftfahrzeugs darstellen kann, ist das übergeordnete System der Teil der Kraftfahrzeug-Elektronik, der die Ansteuerung, Auswertung und Anzeige der Signale bzw. deren Weiterverarbeitung übernimmt.

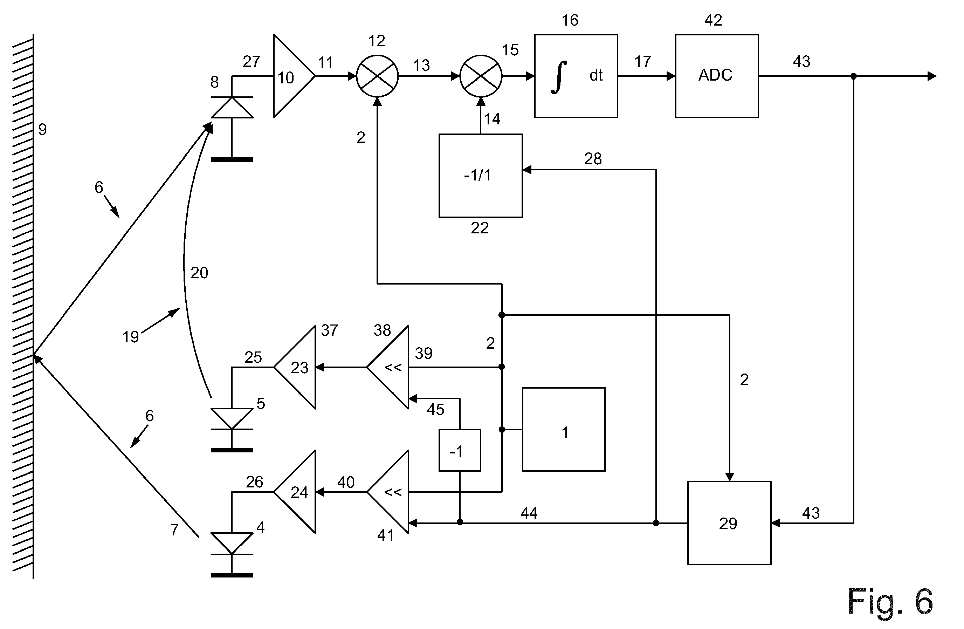

In manchen Fällen wird das System, wie anhand der Figuren 1 und 2 beschrieben, eine höhere Auflösung benötigen, als diese mit der oben beschriebenen komplementären PWM-Modulation der Signale 26 und 25 erreichbar ist. Daher kann eine erweitere Schaltung gemäß Figur 6 sinnvoll sein, bei der ein Analog-/Digital-Wandler (ADC) 42 das Integrator-Signal 17 in einen digitalen Wert 43 wandelt. Dieser wird wieder in einer Verzögerungseinheit 29 um einen Takt verzögert und regelt dann nach entsprechender Anpassung 39, 44, 45 je einen regelbaren Verstärker 38, 41 in der Art, dass das Signal 2 nicht nur umgeschaltet wird, sondern dass auch eine Amplitudenregelung erfolgt. Somit werden das Signal 37 für den Kompensationssender 5 sowie das Signal 40 für den Sender 4 in der Amplitude geregelt. Zwar geht hierdurch der Vorteil einer weitestgehenden Realisierbarkeit in Digitaltechnik verloren, jedoch wird die Gesamtauflösung gegenüber dem Stand der Technik erhöht.

## Patentansprüche

1. Verfahren zur Vermessung der Übertragungseigenschaften einer ersten Übertragungsstrecke (6) zwischen einem ersten Sender (4) und einem Empfänger (8), wobei
- der erste Sender (4) ein erstes Signal (7) in die erste Übertragungsstrecke (6) hineinsendet, das nach Durchgang durch mindestens einen Teil der ersten Übertragungsstrecke (6) von dem Empfänger (8) detektiert wird,
- ein zweiter Sender (5) ein zweites Signal (19) in eine zweite Übertragungsstrecke (20) hineinsendet, die in ihren Eigenschaften bekannt, vorbestimmt oder vorbestimmbar ist,
- in den Empfänger (8) das zweite Signal (19) nach Durchgang durch die zweite Übertragungsstrecke (20) empfangen wird und mit dem ersten Signal (7) überlagert wird,
**dadurch gekennzeichnet, dass**
- ein Sendesignal (2) zwischen dem ersten Sender (4) und dem zweiten Sender (5) zumindest zeitweise geregelt verteilt wird;
- ein durch den Empfänger (8) empfangenes Empfangssignal (27) einen ersten Signalanteil (27a), der dem ersten Sender (4) zuzuordnen ist, und einen zweiten Signalanteil (27b), der dem zweiten Sender (5) zuzuordnen ist, umfasst, wobei der über einen vordefinierten Zeitraum (T) gemittelte erste Signalanteil (27) genauso groß ist wie der über den Zeitraum (T) gemittelte zweite Signalanteil und
- bezogen auf das durch den Empfänger (8) empfangene Empfangssignal (27) die Abweichung des über den vordefinierten Zeitraum (T) gemittelten ersten Signalanteils (27a) von dem über den vordefinierten Zeitraum (T) gemittelten zweiten Signalanteil (27b) zumindest zeitweise als Regelsignal für die Verteilung des Sendesignals (2) zwischen dem ersten Sender (4) und dem zweiten Sender (5) genutzt wird, und
- die Sender (4, 5) ein akustisches Signal aussenden und der Empfänger (8) das akustische Signal nach Durchgang durch die Übertragungsstrecke (6, 20) empfängt.

2. Verfahren nach Anspruch 1, **dadurch gekennzeichnet, dass** die Sender (4, 5) ein hörbares oder nicht-hörbares Schallsignal oder ein Ultraschallsignal aussenden.

3. Verfahren nach Anspruch 1 oder 2, **dadurch gekennzeichnet, dass** zwischen dem ersten Sender (4) und dem zweiten Sender (5) zumindest zeitweise zeitabhängig oder phasenabhängig geregelt umgeschaltet wird und/oder eine geregelte Umschaltung des Sendesignals (2) zwischen dem ersten Sender (4) und dem zweiten Sender (5) erfolgt.

4. Verfahren nach einem der vorhergehenden Ansprüche, **dadurch gekennzeichnet, dass** das besagte Sendesignal (2) zumindest zeitweise zwischen dem besagten ersten Sender (4) und dem besagten zweiten Sender (5) in der Amplitude geregelt verteilt wird.

5. Verfahren nach einem der vorhergehenden Ansprüche, **dadurch gekennzeichnet, dass** ein Umschaltsignal (28), das zur Umschaltung zwischen einem ersten Sender (4) und einem zweiten Sender (5) genutzt wird, nach Multiplikation mit einer Konstanten mit dem verstärkten oder nicht verstärkten und/oder mit dem modulierten oder unmodulierten Empfängersignal (11, 13) multipliziert wird.

6. Verfahren nach einem der vorhergehenden Ansprüche, **dadurch gekennzeichnet, dass** zumindest eines der Sendesignale (2), das zur Ansteuerung des ersten Senders (4) und des zweiten Senders (5) genutzt wird, mit dem verstärkten oder nicht verstärkten und/oder mit dem modulierten oder unmodulierten Empfängersignal (11, 13, 15) multipliziert wird.

7. Verfahren nach einem der vorhergehenden Ansprüche, **dadurch gekennzeichnet, dass** das Empfängersignal (11, 13, 15) des Empfängers (8) nach Multiplikation mit dem vorzeichenrichtigen Umschaltsignal (14) und dem Sendesignal (2) gefiltert, insbesondere integriert, wird.

8. Verfahren nach einem der vorhergehenden Ansprüche, **dadurch gekennzeichnet, dass** das Empfängersignal nach einer Filterung und/oder zumindest einer Multiplikation einem Komparator zugeleitet wird, der das Signal in ein digitales Signal umwandelt.

9. Verfahren nach einem der vorhergehenden Ansprüche, **dadurch gekennzeichnet, dass** der durch einen Komparator (18) erzeugte Bitstrom ein Maß für Eigenschaften der Übertragungsstrecke (6) von zumindest dem ersten Sender (4) zu zumindest dem Empfänger (8) und/oder ein Maß für Eigenschaften von Objekten (9) darstellt, die mit der Übertragungsstrecke (6) in einem Wirkzusammenhang stehen oder ein Teil derselben sind.

10. Verfahren nach einem der vorhergehenden Ansprüche, **dadurch gekennzeichnet, dass** ein Sendesignal (2), bevorzugt ein digitales Sendesignal (2), erzeugt wird.

11. Sensor zur Vermessung der Übertragungseigenschaften einer ersten Übertragungsstrecke umfassend
- einen ersten Sender (4), der ein erstes Signal (7) in die erste Übertragungsstrecke (6) einspeist,
- einen zweiten Sender (5), der ein zweites Signal (19) in eine zweite Übertragungsstrecke (20), die vorbestimmt oder vorbestimmbar ist, einspeist,
- einen Empfänger (8) zum Empfangen des ersten Signals (7) und des zweiten Signals (19),
- einen Empfangsverstärker (10) zur Verarbeitung des Empfängersignals (27) des Empfängers (8),
- einen ersten Treiber (24) zur Ansteuerung des ersten Senders (4),
- einen zweiten Treiber (23), der bevorzugt ein Verstärker ist, zur Ansteuerung des zweiten Senders (5), wobei der erste Treiber (24) und der zweite Treiber (23) ein Bauteil sein können,
- eine Regelungsschaltung, mit
- einem Signalgenerator (1), einem Schalter (3), um ein von dem Signalgenerator (1) erzeugtes Sendesignal (2) geschaltet zu dem ersten Sender (4) oder dem zweiten Sender (5) zu leiten,
- einem ersten Multiplizierer (12), mit dem das verstärkte Empfangssignal mit dem Sendesignal (2) multipliziert wird,
- einem zweiten Multiplizierer zum Multiplizieren des verarbeiteten Empfangssignals mit einem vorzeichenbehafteten Umschaltsignal (14),
- einem Integrierer (16), und
- einem Komparator (18) zur Digitalisierung des verarbeiteten integrierten Empfangssignals, wobei das Ausgangssignal des Komparators (18) nach Verzögerung mittels einer Verzögerungsschaltung (29) die Stellung des Schalters (3) bestimmt,
wobei die Sender (4, 5) ein akustisches Signal aussenden und der Empfänger (8) das akustische Signal nach Durchgang durch die Übertragungsstrecke (6, 20) empfängt.

12. Sensor nach Anspruch 11, **dadurch gekennzeichnet, dass** die Sender (4, 5) ein hörbares oder nicht-hörbares Schallsignal oder ein Ultraschallsignal aussenden.

13. Sensor nach Anspruch 11 oder 12, **dadurch gekennzeichnet, dass**
- der Treiber (24) und/oder der Treiber (23) einen Digital-Zu-Analogwandler (DAC) umfasst, der bevorzugt als Ein-Bit- oder Mehr-Bit-DAC ausgebildet ist,
- der Empfangsverstärker (10) ein Analog-Zu-Digital-Wandler (ADC) ist, der das Empfangssignal (27) in ein digitalisiertes Signal (31) umwandelt,
- wobei die Regelungsschaltung als digitale Logik oder Finite-State-Machine (FSM) oder als digitales Rechensystem (32) mit mindestens einem Speicher und einer Zentraleinheit ausgebildet ist.

14. Sensor nach einem der Ansprüche 11 bis 13, **dadurch gekennzeichnet, dass**
- die erste Übertragungsstrecke (6) nicht vorbestimmt ist und/oder
- der erste Treiber (24) ein Verstärker ist und/oder
- der zweite Treiber (23) ein Verstärker ist, wobei der erste Treiber (24) und der zweite Treiber (23) bevorzugt ein Bauteil sind.

15. Sensor nach einem der Ansprüche 11 bis 14, **dadurch gekennzeichnet, dass** der Sensor (100) dazu ausgebildet und eingerichtet ist, das Verfahren nach einem der vorhergehenden Ansprüche 1 bis 10 durchzuführen.

16. Sensor nach einem der Ansprüche 11 bis 15, **dadurch gekennzeichnet, dass** der erste Sender (4) und der zweite Sender (5) je ein Lautsprecher sind und der Empfänger entsprechend ausgebildet ist, insbesondere ein Mikrofon ist.

17. Vorrichtung zur Vermessung der Übertragungseigenschaften einer ersten Übertragungsstrecke (6) umfassend einen Sensor (100) nach einem der Ansprüche 11 bis 16, wobei das Umschaltsignal (21) des Sensors (100) an eine Verarbeitungseinheit übergeben wird.

18. Vorrichtung nach Anspruch 17, **dadurch gekennzeichnet, dass** die Vorrichtung in einem Kraftfahrzeug verwendet wird, um Objekte in der Nähe des Kraftfahrzeugs zu detektieren, wobei die Vorrichtung bevorzugt eine Einparkhilfeeinrichtung eines Kraftfahrzeugs ist.

## Claims

1. Method for measuring the transmission characteristics of a first transmission path (6) between a first transmitter (4) and a receiver (8), wherein
- the first transmitter (4) sends a first signal (7) into the first transmission path (6) and said first signal (7) is detected by the receiver (8) after it passes through at least a section of the first transmission path (6),
- a second transmitter (5) sends a second signal (19) into a second transmission path (20) that with respect to its characteristics is known, is predetermined or can be predetermined,
- the second signal (19) is received in the receiver (8) after it passes through the second transmission path (20) and is superimposed with the first signal (7),
**characterized in that**
- a transmission signal (2) is at least intermittently distributed between the first transmitter (4) and the second transmitter (5) in a controlled manner;
- a receiver signal (27) received by the receiver (8) comprises a first signal component (27a) to be assigned to the first transmitter (4) and a second signal component (27b) to be assigned to the second transmitter (5), wherein the first signal component (27) averaged over a predefined time period (T) is exactly as large as the second signal component averaged over said time period (T), and
- the deviation of the first signal component (27a) averaged over the predefined time period (T) from the second signal component (27b) averaged over the predefined time period (T) is - referred to the receiver signal (27) received by the receiver (8) - at least intermittently used as control signal for the distribution of the transmission signal (2) between the first transmitter (4) and the second transmitter (5), and
- the transmitters (4, 5) emit an acoustic signal and the receiver (8) receives the acoustic signal after it passes through the transmission path (6, 20).

2. Method according to claim 1, **characterized in that** the transmitters (4, 5) emit an audible or inaudible sound signal or ultrasonic signal.

3. Method according to claim 1 or 2, **characterized in that** controlled switching between the first transmitter (4) and the second transmitter (5) takes place in an at least intermittently time-dependent or phase-dependent manner and/or controlled switching of the transmission signal (2) between the first transmitter (4) and the second transmitter (5) is carried out.

4. Method according to any one of the preceding claims, **characterized in that** said transmission signal (2) is at least intermittently distributed between said first transmitter (4) and said second transmitter (5) in an amplitude-controlled manner.

5. Method according to any one of the preceding claims, **characterized in that** a switching signal (28) used for switching between a first transmitter (4) and a second transmitter (5) is multiplied by the amplified or non-amplified and/or by the modulated or unmodulated receiver signal (11, 13) after multiplication by a constant.

6. Method according to any one of the preceding claims, **characterized in that** at least one of the transmission signals (2) used for activating the first transmitter (4) and the second transmitter (5) is multiplied by the amplified or non-amplified and/or by the modulated or unmodulated receiver signal (11, 13, 15).

7. Method according to any one of the preceding claims, **characterized in that** the receiver signal (11, 13, 15) of the receiver (8) is filtered, particularly integrated, after multiplication by the switching signal (14) with the correct sign and by the transmission signal (2).

8. Method according to any one of the preceding claims, **characterized in that** after filtering and/or at least one multiplication, the receiver signal is fed to a comparator that converts the signal into a digital signal,

9. Method according to any one of the preceding claims, **characterized in that** the bit stream generated by a comparator (18) represents a measure for characteristics of the transmission path (6) from at least the first transmitter (4) to at least the receiver (8) and/or a measure for characteristics of objects (9) that are functionally correlated to the transmission path (6) or form part thereof.

10. Method according to any one of the preceding claims, **characterized in that** a transmission signal (2), preferably a digital transmission signal (2), is generated.

11. Sensor for measuring the transmission characteristics of a first transmission path, comprising
- a first transmitter (4) that emits a first signal (7) into the first transmission path (6),
- a second transmitter (5) that emits a second signal (19) into a second transmission path (20) that is or can be predetermined,
- a receiver (8) for receiving the first signal (7) and the second signal (19),
- a receiver amplifier (10) for processing the receiver signal (27) of the receiver (8),
- a first driver (24) for activating the first transmitter (4),
- a second driver (23), preferably an amplifier, for activating the second transmitter (5), wherein the first driver (24) and the second driver (23) may be realized in the form of one component,
- a control circuit with
- a signal generator (1), a switch (3) for routing a transmission signal (2) generated by the signal generator (1) to the first transmitter (4) or to the second transmitter (5) in a switched manner,
- a first multiplier (12), by means of which the amplified receiver signal is multiplied by the transmission signal (2),
- a second multiplier for multiplying the processed receiver signal by a signed switching signal (14),
- an integrator (16), and
- a comparator (18) for digitizing the processed integrated receiver signal, wherein, after being delayed by means of a delay circuit (29), the output signal of the comparator (18) defines the position of the switch (3),
wherein the transmitters (4, 5) emit an acoustic signal and the receiver (8) receives the acoustic signal after it passes through the transmission path (6, 20).

12. Sensor according to claim 11, **characterized in that** the transmitters (4, 5) emit an audible or inaudible sound signal or ultrasonic signal.

13. Sensor according to claim 11 or 12, **characterized in that**
- the driver (24) and/or the driver (23) comprises a digital-to-analog converter (DAC) that is preferably realized in the form of a single bit DAC or multiple bit DAC,
- the receiver amplifier (10) is an analog-to-digital converter (ADC) that converts the receiver signal (27) into a digitalized signal (31),
- wherein the control circuit is designed in the form of a digital logical unit or a finite-state machine (FSM) or in the form of a digital computer system (32) with at least one memory and a central processing unit.

14. Sensor according to one of the claims 11 to 13, **characterized in that**
- the first transmission path (6) is not predetermined and/or
- the first driver (24) is an amplifier and/or
- the second driver (23) is an amplifier, wherein the first driver (24) and the second driver (23) are preferably designed in the form of one component.

15. Sensor according to one of the claims 11 to 14, **characterized in that** the sensor (100) is designed and adapted for carrying out the method according to one of preceding claims 1 to 10.

16. Sensor according to one of the claims 11 to 15, **characterized in that** the first transmitter (4) and the second transmitter (5) respectively are loudspeakers, and **in that** the receiver is realized accordingly and is, in particular, a microphone.

17. Device for measuring the transmission characteristics of a first transmission path (6) comprising a sensor (100) according to one of the claims 11 to 16, wherein the switching signal (21) of the sensor (100) is delivered to a processing unit.

18. Device according to claim 17, **characterized in that** the device is used in a motor vehicle in order to detect objects in the vicinity of the motor vehicle, wherein the device is preferably designed in the form of a parking aid device of a motor vehicle.

## Revendications

1. Procédé pour la mesure des propriétés de transmission d'un premier espace de transmission (6) entre un premier émetteur (4) et un récepteur (8),
- le premier émetteur (4) émettant un premier signal (7) dans le premier espace de transmission (6), qui après traversée d'au moins une partie du premier espace de transmission (6), est détecté par le récepteur (8),
- un deuxième émetteur (5) émettant un deuxième signal (19) dans un deuxième espace de transmission (20) dont les propriétés sont connues, prédéterminées ou prédéterminables,
- le deuxième signal (19) étant reçu dans le récepteur (8) après traversée du deuxième espace de transmission (20) et étant superposé au premier signal (7),
**caractérisé en ce que**
- un signal d'émission (2) est réparti de manière régulée, au moins par intervalles de temps, entre le premier émetteur (4) et le deuxième émetteur (5) ;
- un signal de réception (27) reçu par le récepteur (8) comprend une première partie de signal (27a) qui doit être associée au premier émetteur (4), et une deuxième partie de signal (27b) qui doit être associée au deuxième émetteur (5), la première partie de signal (27) moyennée sur un espace de temps prédéfini (T) étant exactement aussi grande que la deuxième partie de signal moyennée sur l'espace de temps (T) et
- à partir du signal de réception (27) reçu par le récepteur (8), l'écart de la première partie de signal (27a) moyennée sur l'espace de temps prédéfini (T) par rapport à la deuxième partie de signal (27b) moyennée sur l'espace de temps prédéfini (T) est au moins par intervalles de temps utilisé comme signal de régulation pour la répartition du signal d'émission (2) entre le premier émetteur (4) et le deuxième émetteur (5), et
- les émetteurs (4, 5) émettent un signal acoustique et le récepteur (8) reçoit le signal acoustique après traversée de l'espace de transmission (6, 20).

2. Procédé selon la revendication 1, **caractérisé en ce que** les émetteurs (4, 5) émettent un signal sonore audible ou inaudible ou un signal ultrasonore.

3. Procédé selon la revendication 1 ou 2, **caractérisé en ce qu'**entre le premier émetteur (4) et le deuxième émetteur (5) il y a une commutation régulée au moins par intervalles de temps en fonction du temps ou en fonction de la phase et/ou il y a une commutation régulée du signal d'émission (2) entre le premier émetteur (4) et le deuxième émetteur (5).

4. Procédé selon l'une des revendications précédentes, **caractérisé en ce que** ledit signal d'émission (2) est réparti au moins par intervalles de temps entre ledit premier émetteur (4) et ledit deuxième émetteur (5) avec régulation d'amplitude.

5. Procédé selon l'une des revendications précédentes, **caractérisé en ce qu'**un signal de commutation (28), qui est utilisé pour la commutation entre un premier émetteur (4) et un deuxième émetteur (5), est multiplié après multiplication par une constante par le signal de réception (11, 13) amplifié ou non amplifié et/ou modulé ou non modulé.

6. Procédé selon l'une des revendications précédentes, **caractérisé en ce qu'**au moins un des signaux d'émission (2), qui est utilisé pour la commande du premier émetteur (4) et du deuxième émetteur (5), est multiplié par le signal de réception (11, 13, 15) amplifié ou non amplifié et/ou modulé ou non modulé.

7. Procédé selon l'une des revendications précédentes, **caractérisé en ce que** le signal de réception (11, 13, 15) du récepteur (8) est filtré, en particulier intégré, après multiplication par le signal de commutation (14) affecté d'un signe et le signal d'émission (2).

8. Procédé selon l'une des revendications précédentes, **caractérisé en ce que** le signal de réception, après un filtrage et/ou au moins une multiplication, est dirigé vers un comparateur qui convertit le signal en un signal numérique.

9. Procédé selon l'une des revendications précédentes, **caractérisé en ce que** le train de bits produit par un comparateur (18) représente une mesure pour des propriétés de l'espace de transmission (6) d'au moins le premier émetteur (4) à au moins le récepteur (8) et/ou une mesure pour les propriétés d'objets (9) qui sont en interaction avec l'espace de transmission (6) ou en sont une partie.

10. Procédé selon l'une des revendications précédentes, **caractérisé en ce qu'**il est produit un signal d'émission (2), de préférence un signal d'émission (2) numérique.

11. Détecteur pour la mesure des propriétés de transmission d'un premier espace de transmission, comprenant
- un premier émetteur (4) qui envoie un premier signal (7) dans le premier espace de transmission (6),
- un deuxième émetteur (5) qui envoie un deuxième signal (19) dans un deuxième espace de transmission (20) qui est prédéterminé ou prédéterminable,
- un récepteur (8) pour la réception du premier signal (7) et du deuxième signal (19),
- un amplificateur de réception (10) pour le traitement du signal de réception (27) du récepteur (8),
- un premier pilote (24) pour la commande du premier émetteur (4),
- un deuxième pilote (23), qui est de préférence un amplificateur, pour la commande du deuxième émetteur (5), le premier pilote (24) et le deuxième pilote (23) pouvant être un composant,
- un circuit de régulation, avec
- un générateur de signal (1), un interrupteur (3) pour diriger un signal d'émission (2) produit par le générateur de signal (1) commuté vers le premier émetteur (4) ou le deuxième émetteur (5),
- un premier multiplicateur (12) avec lequel le signal de réception amplifié est multiplié par le signal d'émission (2),
- un deuxième multiplicateur pour multiplier le signal de réception traité par un signal de commutation (14) affecté d'un signe,
- un intégrateur (16), et
- un comparateur (18) pour la numérisation du signal de réception intégré traité, le signal de sortie du comparateur (18) déterminant la position du commutateur (3) après un retard au moyen d'un circuit à retard (29),
les émetteurs (4, 5) émettant un signal acoustique et le récepteur (8) recevant le signal acoustique après traversée de l'espace de transmission (6, 20).

12. Détecteur selon la revendication 11, **caractérisé en ce que** les émetteurs (4, 5) émettent un signal sonore audible ou inaudible ou un signal ultrasonore.

13. Détecteur selon la revendication 11 ou 12, **caractérisé en ce que**
- le pilote (24) et/ou le pilote (23) comprend un convertisseur numérique-analogique (DAC) qui de préférence est conçu sous la forme d'un DAC à un bit ou à plusieurs bits,
- l'amplificateur de réception (10) est un convertisseur analogique-numérique (ADC) qui convertit le signal de réception (27) en un signal numérisé (31),
- le circuit de régulation étant conçu sous la forme d'une logique numérique ou d'une machine d'état fini (FSM) ou sous la forme d'un système de calcul numérique (32) avec au moins une mémoire et une unité centrale.

14. Détecteur selon l'une des revendications 11 à 13, **caractérisé en ce que**
- le premier espace de transmission (6) n'est pas prédéterminé et/ou
- le premier pilote (24) est un amplificateur et/ou
- le deuxième pilote (23) est un amplificateur, le premier pilote (24) et le deuxième pilote (23) étant de préférence un composant.

15. Détecteur selon l'une des revendications 11 à 14, **caractérisé en ce que** le détecteur (100) est conçu et destiné de sorte à exécuter le procédé selon l'une des revendications précédentes 1 à 10.

16. Détecteur selon l'une des revendications 11 à 15, **caractérisé en ce que** le premier émetteur (4) et le deuxième émetteur (5) sont chacun un haut-parleur et le récepteur est conçu de façon correspondante, en particulier est un microphone.

17. Dispositif pour la mesure des propriétés de transmission d'un premier espace de transmission (6) comprenant un détecteur (100) selon l'une des revendications 11 à 16, le signal de commutation (21) du détecteur (100) étant transmis à une unité de traitement.

18. Dispositif selon la revendication 17, **caractérisé en ce que** le dispositif est utilisé dans un véhicule automobile pour détecter des objets à proximité du véhicule automobile, le dispositif étant de préférence une installation d'aide au stationnement d'un véhicule automobile.
